# EUROPEAN PATENT SPECIFICATION

(11) **EP 1 947 611 B1**
(45) Date of publication and mention of the grant of the patent: **03.08.2011**
(21) Application number: 08250184.2
(22) Date of filing: 15.01.2008
(51) Int. Cl.: G07C 9/00, G06F 21/00, G07F 7/10

(54) **Settlement terminal and IC card**
Abrechnungsendgerät und Chipkarte
Terminal de règlement et carte à puce

(30) Priority: 17.01.2007 JP 2007007602
(43) Date of publication of application: 23.07.2008
(73) Proprietor: Hitachi, Ltd., Chiyoda-ku Tokyo 100-8280 (JP)
(72) Inventor: Aikawa, Makoto, Tokyo 100-8220 (JP); Takami, Yutaka, Tokyo 100-8220 (JP); Ito, Shigeyuki, Tokyo 100-8220 (JP); Hashimoto, Kazunori, Tokyo 100-8220 (JP)
(74) Representative: Calderbank, Thomas Roger

(56) References cited:
- EP-A- 1 669 942
- EP-A- 1 727 098
- EP-A2- 1 473 618
- US-A- 6 084 968
- US-A1- 2002 021 001
- US-A1- 2002 095 587
- US-A1- 2004 039 708

## Description

This invention relates to an IC card.

Most of the cash cards and credit cards used now for financial transactions are of magnetic stripe type. With the recent increase in the illegal use of forged cards, however, the magnetic stripe cards have been rapidly replaced with IC cards. The IC card with an IC chip buried therein can positively protect the data, and as compared with the magnetic stripe card, is far more difficult to forge. The present defacto standard of the cash card and the credit card using an IC chip is defined by the EMV specification.

The EMV specification employs the PIN verification method for identifying the legal owner of the IC card, where PIN (personal identification number) is the password of the cash card or the credit card, as the case may be. The problem of the PIN verification method, however, is that the IC card owner is liable to forget his/her PIN and that the pretension to be the owner by thief cannot be sufficiently prevented. In view of this, the biometrics authentication utilizing the biometrics information such as fingerprints, veins and iris different from one person to another and difficult to steal have recently been closely watched. A biometrics authentication method using the IC card is disclosed in US7,162,058B (Mimura et al.).

In US7,162,058B (Mimura et al.), the biometrics information of the owner is stored in the IC card (the biometrics information stored in the IC card is hereinafter referred to the biometrics registered data) in advance, and the biometrics information acquired by a biometrics information sensor for detecting the biometrics information at the time of identifying the principal (hereinafter referred to the biometrics verification data) is input in the IC card. Then, the biometrics registered data and the biometrics verification data are collated with each other in the IC card thereby to identify the user.

EP 1 473 618 discloses a security framework for a host computer system in which one or more modular security application agents perform processing between a security token and the host computer.

EP 1 669 942 discloses an automated transaction device capable of biometric authentication of users. When biometric authentication is not successful, the device switches to password authentication using an IC card.

According to the PIN verification method employed for the cash card and the credit card, the limit number of times PIN verification fails is preset to prevent the illegal user from finding the correct PIN after repeated input of PIN, and upon PIN verification failure the preset number of times, further financial transactions are prohibited in many cases. This method is inconvenient, however, in that the financial transactions are also prohibited in the case where the legitimate user forgets this PIN or inputs a wrong PIN.

In the biometrics authentication, on the other hand, even the principal may be erroneously Identified as another person in the case where the biometrics registered data in the IC card is low in accuracy or the difference between the biometrics registered data in the IC card and the present biometrics information becomes considerable due to the secular variation of the biometrics characteristics. Upon occurrence of this phenomenon, therefore, the problem is posed that even the legal owner cannot complete the financial transactions based on the biometrics authentication using the IC card as a cash card or a credit card.

Accordingly, it is desirable to provide a settlement terminal and an IC card for identifying the principal while maintaining both security and convenience by combining the PIN verification and the biometrics authentication.

According to one aspect of this invention, there is provided an IC card for person identification of a user, comprising: password verification means for person identification of the user for comparing a password registered in the IC card with a password received from outside the IC card; biometrics authentication means for person identification of the user for comparing biometrics data registered in the IC card with biometrics data received from outside the IC card; a means for managing a person identification method priority order indicating a priority order of a person identification method, a remaining password verification session number indicating the remaining number of times the password verification means can work and a remaining biometrics authentication session number indicating the remaining number of times the biometrics authentication means can work, the person identification method priority order, the remaining password verification session number, and the remaining biometrics authentication session number being stored in a memory of the card; and a means for holding in the memory a person identification method list constituted by a list of usable person identification methods, wherein, after determining the contents of the person identification method list based on the remaining password verification session number and the remaining biometrics authentication session number, the means for holding the person identification method list is arranged to transmit the list to a settlement terminal.

The settlement terminal and the IC card can be realized with the PIN verification and the biometrics authentication combined wherein the person identification is possible while maintaining both security and convenience.

According to this invention, the settlement terminal and the IC card higher in reliability than in the prior art can be realized.

Other objects, features and advantages of the invention will become apparent from the following description of the embodiments of the invention taken in conjunction with the accompanying drawings.

In the drawings:
Fig. 1 is a block diagram showing the configuration of a settlement system according to a first embodiment.
Fig. 2 shows an example of an application management table 141.
Fig. 3 shows an example of the internal configuration of a person identification method list 115.
Fig. 4 is a diagram showing the settlement process sequence between an IC card 100 and a settlement terminal 200.
Fig. 5 is a flowchart showing the person identification process executed by the settlement terminal 200.
Fig. 6 is a flowchart showing the process of setting the person identification method list 115 by a settlement application 110.
Fig. 7 is a flowchart showing the PIN verification process executed by the settlement application 110.
Fig. 8 is a flowchart showing the biometrics authentication process executed by the settlement application 110.
Fig. 9 is a sequence diagram showing the process of canceling the PIN verification by the biometrics authentication and the PIN updating process.
Fig. 10 is a block diagram showing the configuration of the settlement system according to a second embodiment.
Fig. 11 is a sequence diagram showing the process of making impossible the execution of the PIN verification at a settlement center 230.

Embodiments of the invention are described below with reference to the drawings.

### (Embodiment 1)

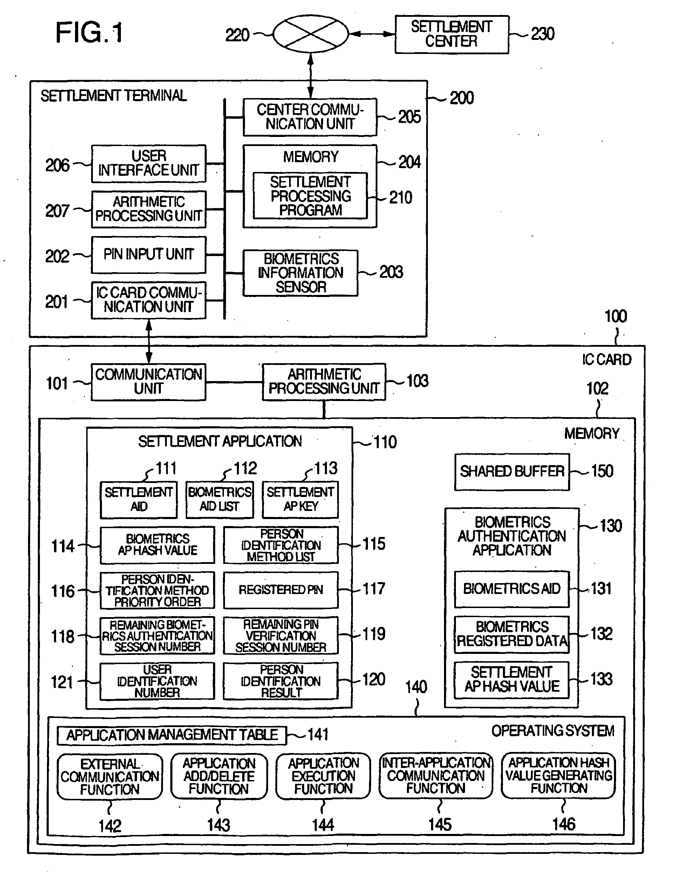

A first embodiment of the invention is explained below with reference to Figs. 1 to 9. First, Fig. 1 is a block diagram showing the configuration of a settlement system according to the first embodiment. This embodiment is configured of an IC card 100, a settlement terminal 200, a network 220 and a settlement center 230.

The IC card 100 is held by the user of the settlement terminal 200 and used for person identification and settlement transactions. The settlement center 230 is configured of a host computer or the like and connected to the settlement terminal 200 through the network 220 for centralized control of the settlement process.

According to this embodiment, the settlement terminal 200 assumes a bank ATM or a credit settlement terminal, and may be a portable terminal such as a mobile phone or a PDA. Although the user of the settlement terminal 200 is assumed to use the IC card 100 as a financial card such as a cash card or a credit card, this embodiment is not limited to the settlement transaction process but applicable also to the person identification using the IC card 100 for entrance and exit or access control using a network.

Next, the internal configuration of the IC card 100 is explained. The IC card 100 includes a communication unit 101, a memory 102 and an arithmetic processing unit 103. The communication unit 101 is used for communication between the IC card 100 and external devices, for example, based on the contact communication according to the international standard ISO/IEC 7816, the non-contact communication according to the international standard ISO/IEC 14443 or other communication standards applicable in this embodiment.

The memory 102 has the function of storing the program and the data held in the IC card 100 and is configured of a semiconductor memory such as a ROM (read-only memory), an EEPROM (electrical erasable programmable read-only memory) or a RAM (random access memory). The arithmetic processing unit 103 is in control of the IC card 100 as a whole, and upon receipt of a command through the communication unit 101, executes the process corresponding to the command based on the program stored in the memory 102 and transmits a corresponding response to an external device through the communication unit 101.

Next, the internal configuration of the settlement terminal 200 is explained. The settlement terminal 200 includes an IC card communication unit 201, a PIN input unit 202, a biometrics information sensor 203, a memory 204, a center communication unit 205, a user interface unit 206 and an arithmetic processing unit 207. The IC card communication unit 201 is used for controlling the IC card 100 based on, for example, the contact communication specified in the international standard ISO/IEC 7816, the non-contact communication specified in the international standard ISO/IEC 14443 or other communication standards as applicable to this embodiment.

The PIN input unit 202 has the function of inputting the PIN of the user and uses, for example, a small ten-key keyboard exclusive to numerical input. The biometrics information sensor 205 has the function of reading the biometrics information such as fingerprints, finger veins or other biometrics information as applicable in this embodiment.

The memory 204 has the function of storing the settlement program 210 and the related data used by the settlement terminal 200 and is configured of a hard disk or a semiconductor memory. The center communication unit 205 is used for data communication with the settlement center 230 and has the function of connection to the public network such as the telephone or internet or a dedicated channel network.

The user interface unit 206 has the display function for outputting and presenting the visual information such as an image or a character or audio information to the user of the settlement terminal 200 and the input function of permitting the user of the settlement terminal 200 to input the required information. The display function includes, for example, the CRT display or the liquid crystal display. The input function, on the other hand, includes, for example, the keyboard or the touch panel. The arithmetic processing unit 207 is in charge of controlling the settlement terminal 200 as a whole, and based on the settlement program 210 stored in the memory 204, executes the settlement process using the IC card 100.

Next, the structure of the program and the data stored in the memory 102 of the IC card 100 is explained. The memory 100 has stored therein a settlement application 110, a biometrics authentication application 130, an operating system 140 and a shared buffer 150.

The settlement application 110 is an IC card application program used for executing the settlement process with the IC card 100. The biometrics authentication application 130 is an IC card application program used for executing the biometrics authentication process with the IC card 100.

The operating system 140 is a system program for providing the basic function required to execute the settlement application 110 and the biometrics authentication application 130 and has the function of selecting and executing the IC card application designated by an external device. Also, the operating system 140 has the fire wall function to protect the program and the data managed by each IC card application from other IC card applications thereby to safely execute each IC card application. A specific example of the operating system 140 is Java (registered trademark) or MULTOS used as an operating system for the IC card, or any other operating systems applicable with equal effect to this embodiment.

The shared buffer 150 is for storing the command received through the communication unit 101 and the corresponding response. The shared buffer 150 is used also to store the data transmitted/received between the settlement application 110 and the biometrics authentication application 130. The settlement application 110, though having the function of person identification by PIN verification, has no function of person identification by biometrics authentication. In the case where the settlement application 110 executes the person identification by biometrics authentication, therefore, the biometrics authentication process is delegated to the biometrics authentication application 130 through the shared buffer 150.

Next, the data structure of the settlement application 110 is explained. The data managed by the settlement application 110 include a settlement AID 111, a biometrics AID list 112, a settlement AP key 113, a biometrics AP hash value 114, a person identification method list 115, a person identification method priority order 116, a registered PIN 117, a remaining biometrics authentication session number 118, a remaining PIN verification session number 119, a person identification result 120 and a user identification number 121.

The settlement AID 111 is an application identifier assigned to the settlement application 110. The AID is an identifier for identifying the IC card application uniquely and used by the operating system 140 to select an application. The international standard ISO/IEC 7816-5 is an internationally effective AID numbering method for the IC card application.

The biometrics AID list 112 is a list of AIDs of biometrics authentication applications usable by the settlement application 110. In the case where the settlement application 110 corresponds to only one type of biometrics authentication application, only the AID of the corresponding biometrics authentication application is stored in the biometrics AID list 112. The settlement AP key 113 is a key data used in various password calculation processes executed by the settlement application 110 for the settlement process.

The biometrics AP hash value 114 is for the biometrics authentication application used by the settlement application 110. The hash value is defined as a value of the result of calculating a data or program with a function called the hash function. The same hash value is very rarely obtained from different data, and therefore, the original data cannot be estimated from the hash value. The settlement application 110, therefore, acquires the biometrics AP hash value 114 in advance, and by acquiring and comparing the biometrics AP hash value 114 again at the time of delegating the biometrics authentication to the biometrics authentication application, can detect the change, if any, of the data or the program of the biometrics authentication application by destruction or alteration. In the case where the settlement application 110 detects the destruction or alteration of the biometrics authentication application, the cancellation of the delegation of the biometrics authentication process can be determined.

The SHA-1 hash function, for example, or other hash functions applicable to this embodiment may be used to generate the biometrics AP hash value 114. The use of a reliable hash function makes it impossible to estimate the contents of the biometrics application from the biometrics AP hash value 114, and therefore, eliminates the chance of leakage of the contents of the biometrics application.

The person identification method list 115 is a list of person identification methods that can be executed by the settlement application 110. The person identification method priority order 116 indicates which is higher in the order of priority, the person identification by biometrics authentication or the person identification by PIN verification. In the case where the value of the person identification method priority order 116 is "0", for example, the priority of the biometrics authentication is higher, while in the case where the value of the person identification method priority order 116 is "1", the priority of the PIN verification is higher, and in the case where the person identification method priority order 116 is "2", the priority order of the two methods is encoded in the same way. In addition to this, other encoding methods of priority order can be used with equal effect according to this embodiment. Also, in the case where a plurality of types of the biometrics authentication methods for the settlement application 110 are available, the priority order of each biometrics authentication method may be indicated.

The registered PIN 117 is the PIN of the user of the IC card 100. The remaining biometrics authentication session number 118 sets the remaining number of times the biometrics authentication process is executed through the settlement application 110.
The remaining PIN verification session number 119, on the other hand, sets the remaining number of times the PIN verification is executed through the settlement application 110. The remaining biometrics authentication session number 118 and the remaining PIN verification session number 119 are both set to a predetermined positive integer as an initial value and reduced each time the person identification session fails. Once the remaining biometrics authentication session number 118 is reduced to "0", the settlement application 110 makes the biometrics authentication inexecutable. In the case where the remaining PIN verification session number 119 is reduced to "0", on the other hand, the settlement application 110 makes the PIN verification inexecutable.

According to this embodiment, the executability of the biometrics authentication is controlled by the settlement application 110 using the remaining biometrics authentication session number 118. Nevertheless, according to this embodiment, the settlement application 110 can hold the number of times the biometrics authentication sessions have failed instead of the number of the remaining biometrics authentication sessions to control the executability of the biometrics authentication with equal effect.

Similarly, according to this embodiment, the executability of the PIN verification is controlled by the settlement application 110 using the remaining PIN verification session number 119. Nevertheless, according to this embodiment, the settlement application 110 can hold the number of times the PIN verification sessions have failed instead of the number of the remaining PIN verification sessions to control the executability of the PIN verification with equal effect.

The person identification result 120 is the result of the person identification carried out by the settlement application 110. The user identification number 121 is for identifying the user of the IC card 100. In the case where the credit card is used for settlement, for example, the credit card number is set, while the bank account number may be set for the cash card transactions. Nevertheless, other numbers may alternatively be used for user identification.

Next, the data structure of the biometrics authentication application 130 is explained. The data managed by the biometrics authentication application 130 include a biometrics AID 131, a biometrics registered data 132 and a settlement AP hash value 133.

The biometrics AID 131 is an application identifier assigned to the biometrics authentication application 130, and like the settlement AID 111 described above, used by the operation system 140 to select and uniquely identify the IC card application. The biometrics registered data 132 is, for example, the biometrics information registered by the user of the IC card 100 and may be the fingerprint pattern, the finger vein pattern or other biometrics information applicable according to this embodiment. The settlement AP hash function 133 is the hash value of the settlement application 110 and used for detecting the destruction or alteration of the settlement application 110.

Next, the data and the functions managed by the operating system 140 are explained. The operating system 140 holds an application management table 141, an external communication function 142, an application add/delete function 143, an application execution function 144, an inter-application communication function 145 and an application hash value generating function 146.

The application management table 141 is used by the operating system 140 to manage the IC card application.

The external communication function 142 receives a command from a device external to the IC card 100 by controlling the communication unit 101 while at the same time transmitting a corresponding response. The application add/delete function 143 has the function of downloading the IC card application from outside the IC card 100 while at the same time registering the downloaded IC card application in the application management table 141 and thus making it executable on the one hand and the function of deleting the IC card application registered in the application management table 141 on the other hand.

In the application execution function 144, a given IC card application registered in the application management table 141 is selected in response to a command external to the IC card 100, and upon subsequent receipt of a command from outside the IC card 100, the selected IC card application is executed thereby to execute the process corresponding to the command.

The IC card application is a program generated based on a dedicated instruction set specification not dependent on the hardware of the IC card, and the application execution function 144 executes the process as an interpreter (or a virtual machine) to read and execute the program generated based on the dedicated instruction set specification.

The application execution function 144 also has the fire wall function to protect the program and the data of the IC card application from the illegal access by other external IC card applications or other IC card applications registered inside the IC card 100. A specific example of the application execution function 144 is the function of Java (registered trademark) card or MULTOS constituting the operating system of the IC card.

The inter-application communication function 145 is such that the IC card application A under execution transmits a message to a designated IC card application B and receives the processing result corresponding to the message from the IC card application B.

Specifically, assume that the IC card application A under execution stores a message in the shared buffer 150 and accesses the inter-application communication function 145 by designating the AID of the IC card application B. Then, the inter-application communication function 145 suspends the operation of the IC card application A and makes executable the IC card application B designated by AID. The IC card application B executes the process corresponding to the message and ends the process by storing the processing result in the shared buffer 150.

After that, the inter-application communication function 145 restores the IC card application A to an executable state. Then, the IC card application A acquires the processing result corresponding to the message from the shared buffer 150. The processing result corresponding to the message is stored in the shared buffer 150, and therefore, shared by the IC card applications. Since the process corresponding to the message is executed in the IC card application, however, the processing contents can be hidden from other IC card applications.

The inter-application communication function 145, as explained in this embodiment, is used by the settlement application 110 to request the biometrics authentication application 130 to execute the biometrics authentication process. A specific example of the inter-application communication function 145 is the delegation function of MULTOS constituting the operating system of the IC card or the SIO(shareable interface object) function of Java (registered trademark) card.

In the application hash value generating function 146, the hash value for the program or the data of the IC card application registered in the application management table 141 is generated using the hash function. An example of the hash function for generating the hash value is the SHA-1 hash function or any other hash function applicable according to this embodiment.

Also, the IC card application under execution, by designating the AID of another IC card application and accessing the application hash value generating function 146, can acquire the hash value of the designated IC card application. According to this embodiment, the original data for generating the hash value includes the whole of the program and the data making up the IC card application, the whole or a part of the program or the whole or a part of the data.

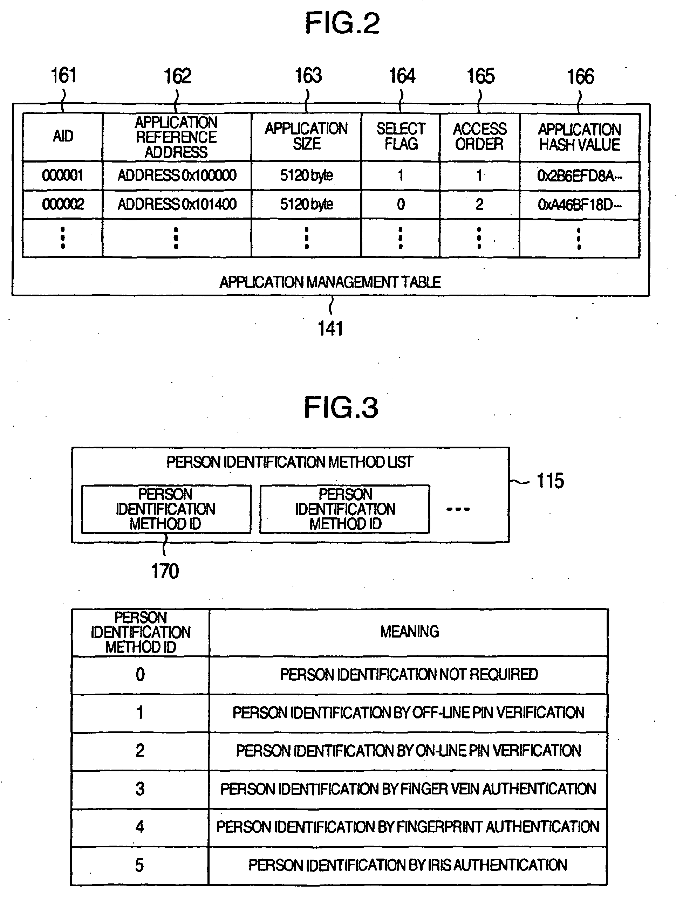

Next, an example of the configuration of the application management table 141 is shown in Fig. 2.
In Fig. 2, the application management table 141 has recorded therein an AID 161, an application reference address 162, an application size 163, a select flag 164, an access order 165 and an application hash value 166 for each IC card application registered. The AID 161 is an identifier for uniquely identifying the corresponding IC card application and used by the operating system 140 to select an application.

The application reference address 162 is a head address of a memory holding the corresponding IC card application. In Fig. 2, one address is set for each IC card application. Nevertheless, a plurality of addresses including the head address of the code section and the head address of the data section, for example, may be set with equal effect.

The application size 163 is that of the corresponding IC card application. In Fig. 2, one size is set for each IC card application, and a plurality of sizes may alternatively be set including the size of the code section and the size of the data section. The select flag 164 indicates whether the corresponding IC card application is currently selected or not. In the example shown in Fig. 2, "1" is set in the case where the IC card application is selected, while "0" is set in the case where it is not selected. Nevertheless, other indication methods may alternatively be used.
The access order 165 is the order of the IC card applications accessed by the inter-application communication function 145. Although the access order is expressed by the magnitude of numerical characters in the example shown in Fig. 2, other methods of expression can be employed with equal effect.

The application hash value 166 sets the hash value of the corresponding IC card application. Although one hash value is set for each IC card application in Fig. 2, a plurality of hash values including the hash value for the whole or a part of the code section and the hash value for the whole or a part of the data section may be set with equal effect. The application hash value generating function 146 described above may recalculate the hash value of the corresponding IC card application upon receipt of each hash value generation request, or may access the application hash value 166 registered in the application management table 141 without recalculating the hash value, as far as applicable according to this embodiment.

Next, an example of the internal configuration of the person identification method list 115 is explained with reference to Fig. 3. In Fig. 3, the person identification method list 115 includes a plurality of person identification method IDs 170. The person identification method 170 is the number for identifying the person identification method. In the example of Fig. 3, the person identification by the off-line PIN verification is indicated by the person identification method ID 170 of "1", the person identification by the on-line PIN verification by the person identification method ID 170 of "2", the person identification by authentication using the finger veins by the person identification method ID 170 of "3", the person identification by authentication using the fingerprints by the person identification method ID 170 of "4", and the person identification by authentication using the iris by the person identification method ID 170 of "5". Also, "0" indicates that the person identification is not required.

The off-line PIN verification is the method of verifying the PIN in the IC card 100, while the on-line PIN verification is the method of verifying the PIN at the settlement center 230. The person identification method list 115 may be in any form of expression other than shown in Fig. 3 as long as the person identification method can be identified according to this embodiment.

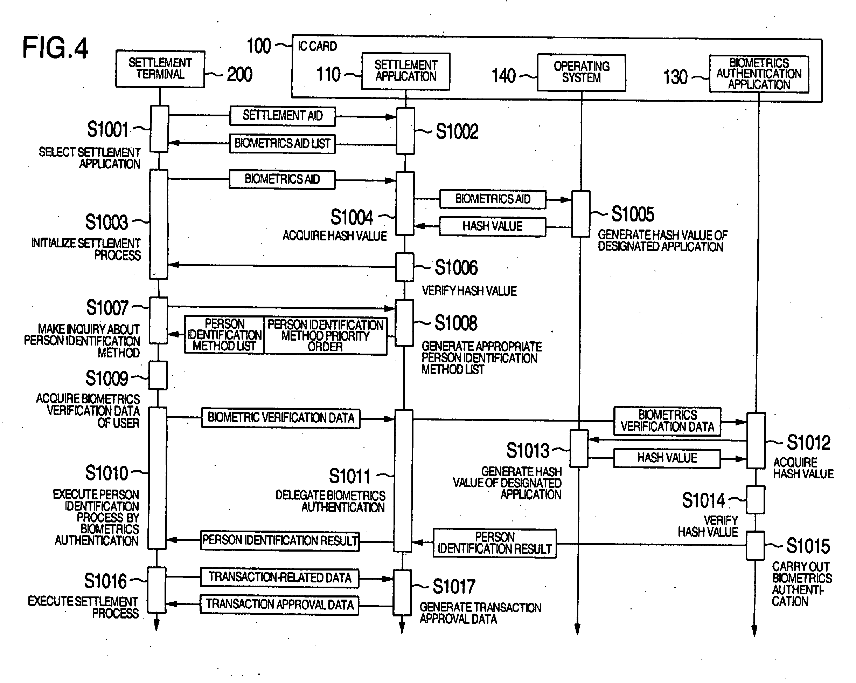

Next, the sequence of the settlement process executed between the IC card 100 and the settlement terminal 200 is explained with reference to Fig. 4. In the settlement process sequence shown in Fig. 4, the biometrics authentication is used for person identification.
<Step S1001> The settlement terminal 200, in order to select the settlement application 110 in the IC card 100, transmits the settlement AID for the settlement application 110 to the IC card 100 and receives the biometrics AID list from the settlement application 110. In this processing step, the communication between the settlement terminal 200 and the IC card 100 uses, for example, the SELECT FILE command according to, for example, ISO/IEC 7816 and EMV standard.
<Step S1002> The settlement application 110 is selected by the application execution function 144 of the operating system 140 and returns the biometrics AID list held in the settlement application 110 to the settlement terminal 220.
<Step S1003> The settlement terminal 200 selects the biometrics AID for the executable biometrics authentication from the biometrics AID list acquired from the settlement application 110, and in order to initialize the settlement process, transmits the selected biometrics AID to the IC card application 110. The communication between the settlement terminal 200 and the IC card 100 in this processing step uses, for example, the GET PROCESSING OPTIONS command according to the EMV standard.
<Step S1004> The settlement application 110 determines the execution of no biometrics authentication unless the designated biometrics AID is included in the biometrics AID list 112. In the case where the designated biometrics AID is included in the biometrics AID list 112, on the other hand, the settlement application 110 requests the operating system 130 to generate the hash value of the biometrics authentication application 130 in order to confirm that the biometrics authentication application 130 corresponding to the designated biometrics AID is not illegally altered or not.
<Step S1005> The operating system 140 retrieves the biometrics authentication application 130 corresponding to the designated biometrics AID using the application management table 141, and generates the hash value of the biometrics authentication application 130 using the application authentication hash value generating function 146.
<Step S1006> The settlement application 110 compares the acquired hash value with the biometrics AP hash value 114 acquired in advance. In the case where the two hash values coincide with each other, it is determined that the biometrics authentication application 130 is available for use, while in the case where the two hash values are not coincident with each other, it is determined that the biometrics authentication application 130 has been illegally altered.
<Step S1007> The settlement terminal 200 transmits a request to acquire the person identification method list and the person identification method priority order from the settlement application 110. In this processing step, the communication between the settlement terminal 200 and the IC card 100 uses, for example, the READ RECORD command according to EMV standard.
<Step S1008> The settlement application 110, upon determination that the biometrics authentication application 130 is available for use in steps S1004 and S1006, adds the corresponding biometrics authentication method and PIN verification method to the person identification method list 15. Upon determination that the biometrics authentication application 130 is not available for use, on the other hand, only the PIN verification method is added to the person identification method list 115. Then, the person identification method list 115 and the person identification method priority order 116 are returned to the settlement terminal 200.
<Step S1009> The settlement terminal 200, upon confirmation that the biometrics authentication can be carried out from the person identification method list 115 and the person identification method priority order 116, acquires the biometrics verification data of the user by use of the biometrics information sensor 203. <Step 1010> The settlement terminal 200, in order to carry out the person authentication by biometrics authentication, transmits the biometrics verification data of the user to the settlement application 110.
   The VERIFY command according to the EMV standard, for example, can be used for communication between the settlement terminal 200 and the IC card 100 in this processing step.
<Step S1011> The settlement application 110 transmits the acquired biometrics verification data to the biometrics authentication application 130 and thus delegates the biometrics authentication process to the biometrics authentication application 130. This delegation process is executed through the inter-application communication function 145 of the operating system 140. Then, the person identification result is acquired from the biometrics authentication application 130, and stored as the person identification result 120 while at the same time transmitting the person identification result to the settlement terminal 200. <Step S1012> The biometrics authentication application 130, in order to confirm that the settlement application 110 is not illegally altered, requests the operating system 140 to generate the hash value of the settlement application 110.
<Step S1013> The operating system 140 generates the hash value of the settlement application 110 using the application hash value generating function 146.
<Step S1014> The biometrics authentication application 130 compares the acquired hash value with the settlement AP hash value 133 acquired in advance. In the case where the comparison result is not coincidental, an illegal alteration is determined by the settlement application 110 and the biometrics authentication process is suspended.
<Step S1015> The biometrics authentication application 130 executes the biometrics authentication process using the biometrics verification data acquired from the settlement application 110 and the biometrics registered data of the user held in advance. Then, the result of the biometrics authentication is returned to the settlement application 110 as the person identification result.
<Step S1016> In the case where the result of the person identification acquired from the settlement application 110 is a "success", the settlement terminal 200 transmits the transaction-related data to the settlement application 110 to execute the settlement process. The transaction-related data contains the transaction amount, the transaction date and the random number for authentication. After that, the settlement terminal 200 acquires the transaction approval data from the settlement application 110. The transaction approval data indicates that the settlement process is approved by the settlement application 110, and generated using the encryption process.
   The transaction approval data acquired from the settlement application 110 may be transferred to the settlement center 230 for final confirmation of the settlement process. The GENERATE APPLICATION CRYPTOGRAM command according to the EMV standard, for example, may be used for communication between the settlement terminal 200 and the IC card 100 in this processing step.
<Step S1017> The settlement application 110, upon acquisition of the transaction-related data from the settlement terminal, confirms the person identification result 120. Upon determination that the person identification result 120 is a success and the transaction is correct, the transaction approval data is generated by the encryption process using the settlement AP key 113. The encryption process for generating the transaction approval data may use either the common key encryption method such as the DES cryptogram or the public key encryption method such as the RSA cryptogram with equal according to this embodiment.

In the settlement process sequence described with reference to Fig. 4, the settlement application 100 and the biometrics authentication application 130 collaborate with each other to detect the illegal alteration by acquiring the hash values thereof from each other through the operating system 140, and therefore, the communication can be safely conducted between the IC card applications. The biometrics verification data transmitted to the IC card 100 by the settlement terminal 200 may be subjected to the encryption process for protection against wiretap or alteration. In such a case, the key data used for the encryption of the biometrics verification data may be shared by the process settlement terminal 200 and the biometrics authentication application 130 using a predetermined key sharing protocol in advance.

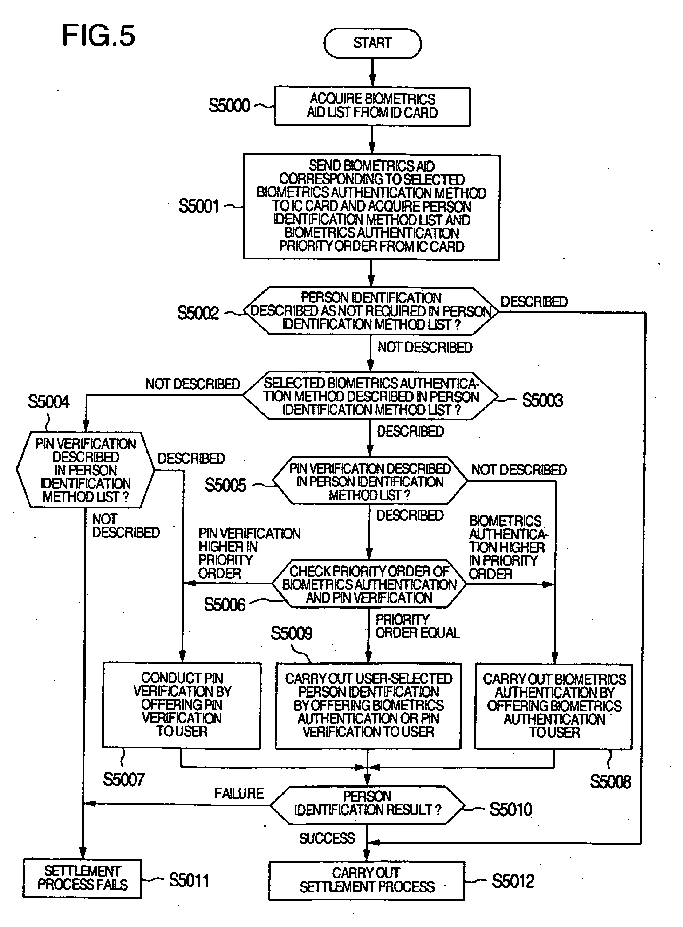

Next, the person identification process executed by the settlement terminal 200 is explained with reference to the flowchart of Fig. 5. This process is executed by steps S1001, S1003 and S1007 of the settlement processing sequence shown in Fig. 4. <Step S5000> The settlement terminal 200 acquires the biometrics AID list providing the list of the AIDs of the biometrics authentication application stored in the IC card 100 from the IC card 100.
<Step S5001> The settlement terminal 200 selects the biometrics AID corresponding to the biometrics authentication method usable at the settlement terminal 200 from the biometrics AID list acquired from the IC card 100, and transmits the selected biometrics AID to the IC card 100. In the case where the biometrics AID list is not acquired from the IC card 100, the biometrics AID list from the IC card 100 is empty or no biometrics authentication method is usable at the settlement terminal 200, then the biometrics AID is not required to be transmitted to the IC card 100. After that, the person identification method list and the person identification method priority order are acquired from the IC card 100.
<Step S5002> In the case where the person identification method list acquired from the IC card 100 contains the description "person identification not required", the process proceeds to step S5012 without executing the person identification process.
   Otherwise, the process proceeds to step S5003.
<Step S5003> In the case where the person identification method list acquired from the IC card 100 contains the description of the biometrics authentication method selected by the settlement terminal 200, the process proceeds to step S5005. Otherwise, the process proceeds to step S5004.
<Step S5004> In the case where the person identification method list acquired from the IC card 100 contains the description of the PIN verification, the process proceeds to step S5007. Otherwise, the person identification is a failure and the process proceeds to step S5011.
<Step S5005> In the case where the person identification method list acquired from the IC card 100 contains the description of the PIN verification, the process proceeds to step S5006. Otherwise the process proceeds to step S5008.
<Step S5006> The person identification method priority order acquired from the IC card 100 is checked, and in the case where the PIN verification is higher in priority order than the biometrics authentication, the process proceeds to step S5007. In the case where the biometrics authentication is higher in priority order than the PIN verification, on the other hand, the process proceeds to step S5008. In the case where the biometrics authentication and the PIN verification are equal to each other in priority order, the process proceeds to step S5009.
<Step S5007> The settlement terminal 200 offers the person identification by PIN verification to the user through the user interface unit 206. The settlement terminal 200 then causes the user to input PIN by way of the PIN input unit 202 for PIN verification. Both the off-line PIN verification conducted in the IC card 100 and the on-line PIN verification conducted at the settlement center 230 are applicable according to this embodiment.
<Step S5008> The settlement terminal 200 offers the person identification by biometrics authentication to the user by way of the user interface unit 206. Then, the settlement terminal 200 generates the biometrics verification data of the user with the biometrics information sensor 203 and thus carries out the biometrics authentication by sending the biometrics verification data to the IC card 100.
<Step S5009> The settlement terminal 200 offers the person identification by PIN verification or biometrics authentication to the user by way of the user interface unit 206. In the case where the user selects the PIN verification, the settlement terminal 200 causes the user to input the PIN through the PIN input unit 202 and carries out the PIN verification. Both the off-line PIN verification conducted in the IC card 100 and the on-line PIN verification conducted at the settlement center 230 are applicable in this embodiment. In the case where the user selects the biometrics authentication, on the other hand, the settlement terminal 200 generates the biometrics verification data of the user with the biometrics information sensor 203 and carries out the biometrics authentication.
<Step S5010> Once the person identification by PIN verification or biometrics authentication succeeds, the process proceeds to step S5012. Otherwise, the process proceeds to step S5011.
<Step S5011> In the case where the person identification of the user has ended in a failure, the settlement terminal 200 cancels the settlement process. <Step S5012> In the case where the person identification of the user has succeeded, the settlement terminal 200 continues the settlement process.

According to the person identification process executed by the settlement terminal 200 described above with reference to the flowchart of Fig. 5, the settlement terminal 200 can appropriately select the person identification method by PIN verification or biometrics authentication based on the person identification method list and the person identification method priority order acquired from the IC card 100. This prevents the erroneous behavior of, for example, offering the biometrics authentication to the user in spite of the lack of compatibility of the IC card 100 with the biometrics authentication.

In the case where the person identification method selected in step S5011 ends in a failure and a person identification method unexecuted and different from the person identification method that has failed is described in the person identification method list, then the unexecuted person identification method can be executed anew. In the case where the unexecuted person identification method additionally executed succeeds, the settlement process may be continued without suspension. Since the person identification first executed has ended in a failure, some conditions may be imposed anew such as to reduce the credit upper limit for settlement.

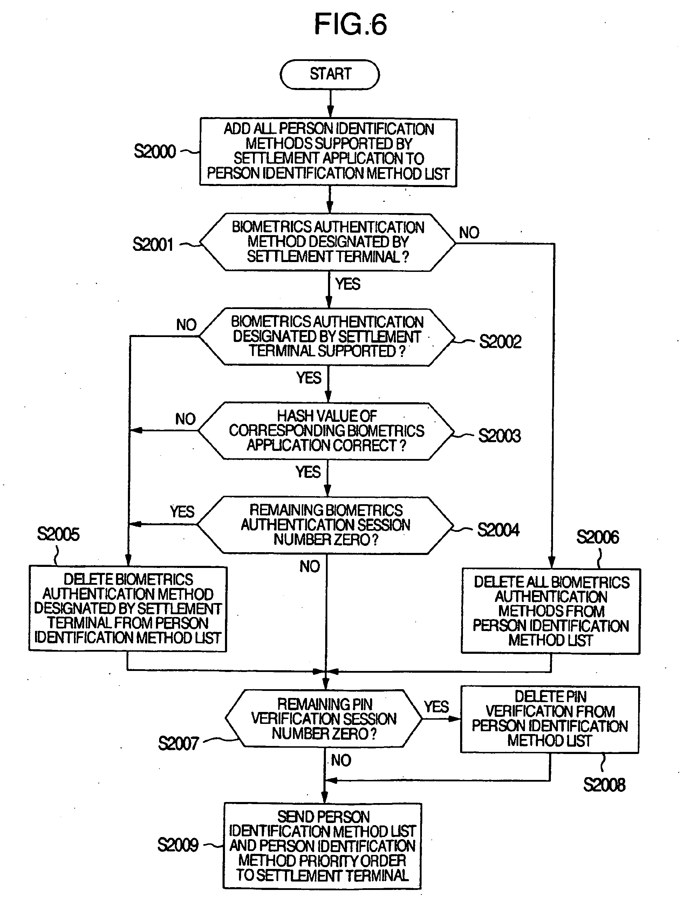

The process of setting the person identification method list 115 executed by the settlement application 110 in the IC card 100 is shown in the flowchart of Fig. 6. This process is executed in step S1008 of the settlement process sequence shown in Fig. 4.
<Step S2000> The settlement application 110 adds all the person identification methods executable by the settlement application 110 to the person identification method list 115.
<Step S2001> In the case where the settlement application 110 designates a specific biometrics authentication method by the biometrics AID, the process proceeds to step S2002. In the case where no biometrics authentication method is designated so, on the other hand, the process proceeds to step S2006.
<Step S2002> The settlement application 110 is capable of handling the biometrics authentication method corresponding to the biometrics AID designated by the settlement terminal 200, the process proceeds to step S2003. Otherwise, the process proceeds to step S2005. <Step S2003> The settlement application 110 verifies the hash value of the biometrics authentication application and upon confirmation that no illegal alteration exists, proceeds to step S2004. Otherwise, the process proceeds to step S2005.
<Step S2004> The settlement application 110 checks the remaining biometrics authentication session number 118 and if it is not zero, proceeds to step S2007. Otherwise, the process proceeds to step S2005.
<Step S2005> The settlement application 110 deletes the biometrics authentication method designated by the settlement terminal 200 from the person identification method list 115.
<Step S2006> The settlement application 110 deletes all the biometrics authentication methods from the person identification method list 115.
<Step S2007> The settlement application 110 checks the remaining PIN verification session number 119 and if it is not zero, proceeds to step S2009. In the case where the remaining PIN verification session number 119 is zero, on the other hand, the process proceeds to step S2008.
<Step S2008> The settlement application 110 deletes the PIN verification from the person identification method list 115.
<Step S2009> The settlement application 110 sends the person identification method list 115 and the person identification method priority order 116 to the settlement terminal 200.

Through the process of setting the person identification method list 115 described with reference to the flowchart of Fig. 6, the person identification method list 115 setting the person identification methods that can be processed between the settlement application 110 and the settlement terminal 200 can be sent to the settlement terminal 200.

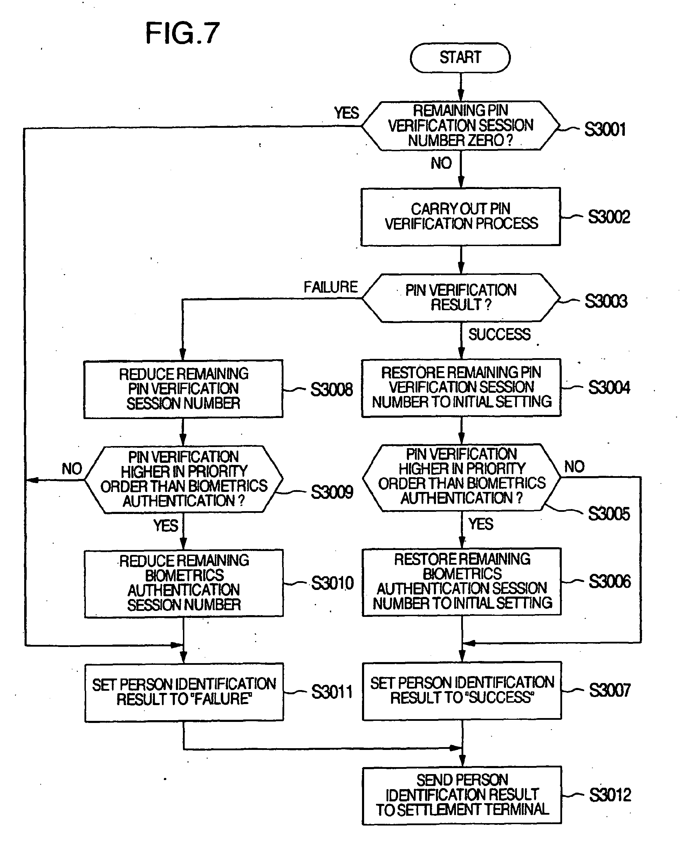

Next, the PIN verification process executed by the settlement application 110 in the IC card 100 is explained with reference to the flowchart of Fig. 7. <Step S3001> The settlement application 110, upon receipt of a PIN verification request from the settlement terminal 200, checks the remaining PIN verification session number 119. In the case where the remaining PIN verification session number 119 is zero, the process proceeds to step S3011. Otherwise, the process proceeds to step S3002.
<Step S3002> The settlement application 110 executes the PIN verification process by checking whether the PIN received from the settlement terminal 200 coincides with the registered PIN 117 held by the settlement application 110.
<Step S3003> In the case where the PIN verification process executed in step S3002 succeeds, the settlement application 110 proceeds to step S3004. Otherwise, the process proceeds to step S3008.
<Step S3004> In the case under consideration, the PIN verification process has ended in a success, the settlement application 110 restores the remaining PIN verification session number 119 to the initial setting. In the case where the remaining PIN verification session number 119 is first set to "5", for example, the initial setting is "5". As an alternative, a predetermined value may be added to the remaining PIN verification session number 119 with equal effect according to this embodiment.
<Step S3005> The settlement application 110 refers to the person identification method priority order 116, and in the case where the priority order of the PIN verification is higher than that of the biometrics authentication, the process proceeds to step S3006. Otherwise, the process proceeds to step S3007.
<Step S3006> The settlement application 110 restores the remaining biometrics authentication session number 118 to the initial setting. In the case where the remaining biometrics authentication session number 118 is first set to "10", for example, the initial setting is "10". As an alternative, a predetermined value may be added to the remaining biometrics authentication session number 118 with equal effect according to this embodiment.
<Step S3007> The settlement application 110 sets the person identification result 120 as a "success".
<Step S3008> Since the PIN verification has ended in a failure, the settlement application 110 reduces the remaining PIN verification session number 119 by a predetermined value.
<Step S3009> The settlement application 110 refers to the person identification method priority order 116 and in the case where the priority order of the PIN verification is higher than that of the biometrics authentication, proceeds to step S3010. Otherwise, the process proceeds to step S3011.
<Step S3010> The settlement application 110 reduces the remaining biometrics authentication session number 118 by a predetermined value.
<Step S3011> The settlement application 110 sets the person identification result 120 as a "failure".
<Step S3012> The settlement application 110 sends the person identification result 120 to the settlement terminal 200.

In the process flow of the PIN verification executed by the settlement application 110 explained above with reference to Fig. 7, assume that the priority order of the PIN verification is higher than that of the biometrics authentication. In the case where the PIN verification succeeds, the remaining biometrics authentication session number 118 and the remaining PIN verification session number 119 are both initialized, while in the case where the PIN verification ends in a failure, both the remaining biometrics authentication session number 118 and the remaining PIN verification session number 119 are reduced by a predetermined value. As a result, even in the case where the remaining biometrics authentication session number 118 is reduced to zero and the biometrics authentication becomes impossible, a successful PIN verification makes it possible to execute the biometrics authentication again. In the case where the priority order of the PIN verification is lower than that of the biometrics authentication, the remaining biometrics authentication session number 118 is not changed by the PIN verification result, and therefore, the biometrics authentication has no effect on the result of the PIN verification.

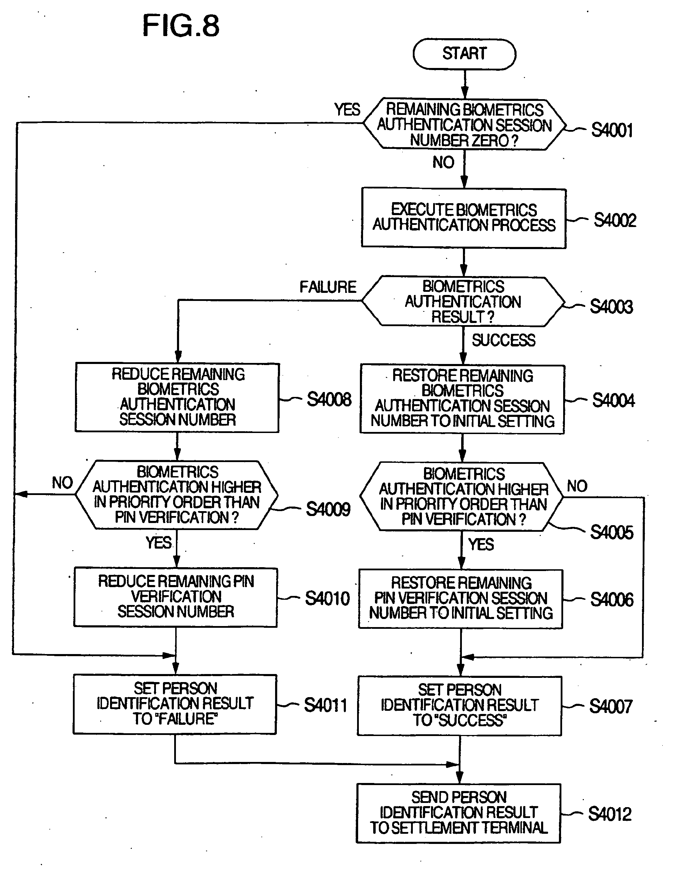

Next, the process of the biometrics authentication executed by the settlement application 110 in the IC card 100 is explained with reference to the flowchart of Fig. 8.
<Step S4001> The settlement application 110, upon receipt of a biometrics authentication request from the settlement terminal 200, checks the remaining biometrics authentication session number 118 and if it is zero, proceeds to step S4011. Otherwise, the process proceeds to step S4002.
<Step S4002> The settlement application 110 sends the biometrics verification data received from the settlement terminal 200 to the biometrics authentication application 130 and thus causes the latter to carry out the biometrics authentication. In this way, the settlement application 110 acquires the biometrics authentication result from the biometrics authentication application 130.
<Step S4003> In the case where the biometrics authentication result acquired from the biometrics authentication application 130 in step S4002 is a success, the settlement application 110 proceeds to step S4004. Otherwise, the process proceeds to step S4008.
<Step S4004> Since the biometrics authentication is a success, the settlement application 110 restores the remaining biometrics authentication session number 118 to the initial setting. As an alternative, the remaining biometrics authentication session number 118 may be increased by a predetermined value with equal effect according to this embodiment.
<Step S4005> The settlement application 110 refers to the person identification method priority order 116, and in the case where the priority order of the biometrics authentication is higher than that of the PIN verification, the process proceeds to step S4006. Otherwise, the process proceeds to step S4007.
<Step S4006> The settlement application 110 restores the remaining PIN verification session number 119 to the initial setting. As an alternative, the remaining PIN verification session number 119 may be increased by a predetermined value with equal effect according to this embodiment.
<Step S4007> The settlement application 110 sets the person identification result 120 as a "success".
<Step S4008> Since the biometrics authentication has ended in a failure, the settlement application 110 reduces the remaining biometrics authentication session number 118 by a predetermined value.
<Step S4009> The settlement application 110 refers to the person identification method priority order 116, and in the case where the priority order of the biometrics authentication is higher than that of the PIN verification, the process proceeds to step S4010. Otherwise, the process proceeds to step S4011.
<Step S4010> The settlement application 110 reduces the remaining PIN verification session number 119 by a predetermined value. Alternatively, only in the case where the value N of the remaining biometrics authentication session number 118 is a multiple of a predetermined integer M, the remaining PIN verification session number 119 may be reduced. In the case where M is 5, for example, the remaining PIN verification session number 119 is reduced for each five failures of the biometrics authentication.
<Step S4011> The settlement application 110 sets the person identification result 120 as a "failure".
<Step S4012> The settlement application 110 sends the person identification result 120 to the settlement terminal 200.

In the process flow of the biometrics authentication executed by the settlement application 110 explained above with reference to Fig. 8, assume that the priority order of the biometrics authentication is higher than that of the PIN verification. In the case where the biometrics authentication succeeds, both the remaining biometrics authentication session number 118 and the remaining PIN verification session number 119 are initialized, while in the case where the PIN verification ends in a failure, both the remaining biometrics authentication session number 118 and the remaining PIN verification session number 119 are reduced by a predetermined value. As a result, even in the case where the remaining PIN verification session number 119 becomes zero and the PIN verification becomes impossible, a successful biometrics authentication makes it possible to execute the PIN verification anew. In the case where the priority order of the biometrics authentication is lower than that of the PIN verification, the remaining PIN verification session number 118 is not changed by the result of the biometrics authentication, and therefore, the PIN verification has no effect on the success or failure of the biometrics authentication.

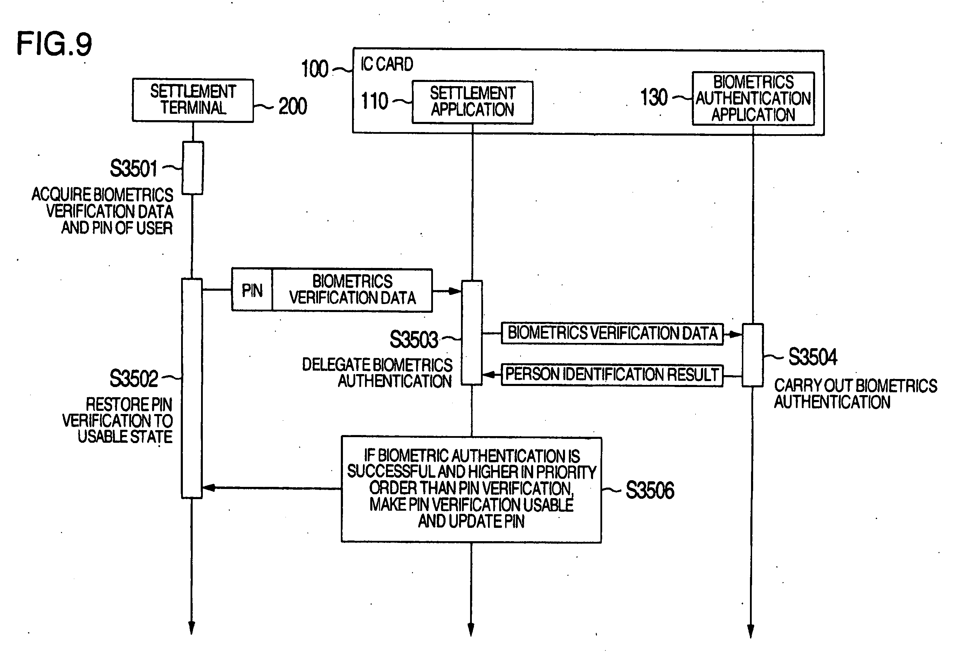

Next, assume that the PIN verification of the settlement application 110 in the IC card 100 becomes impossible to use. Fig. 9 shows the sequence of the process for restoring the PIN verification to the usable state again by the biometrics authentication while at the same time updating the PIN to a new one. <Step S3501> The settlement application 110 acquires the biometrics verification data of the user by the biometrics information sensor 203, while at the same time causing the user to input a new PIN through the PIN input unit 202.
<Step S3502> The settlement application 110 sends the biometrics verification data of the user acquired in step S3501 and the new PIN to the settlement application 110. The communication between the settlement terminal 200 and the IC card 100 in this step may use, for example, the PIN CHANGE/UNBLOCK command according to the EMV standard.
<Step S3503> The settlement application 110 sends the acquired biometrics verification data to the biometrics authentication application 130 and delegates the biometrics authentication process to the biometrics authentication application 130. Then, the person identification result is acquired from the biometrics authentication application 130.
<Step S3504> The biometrics authentication application 130 executes the biometrics authentication process using the biometrics verification data acquired from the settlement application 110 and the biometrics registration data of the user held therein. The result of the biometrics authentication is returned to the settlement application 110 as the person identification result.
<Step S3505> In the case where the person identification by the biometrics authentication succeeds, the settlement application 110 checks the person identification method priority order 116. In the case where the priority order of the biometrics authentication is higher than that of the PIN verification, the remaining PIN verification session number 119 is changed to the initial setting, thereby making it possible to utilize the PIN verification. Also, the value of the registered PIN 117 is updated to a new PIN value acquired from the settlement terminal.

In the processing sequence explained above with reference to Fig. 9, the PIN and the biometrics verification data sent to the IC card 100 by the settlement terminal 200 may be subjected to the encryption process for protection against the wiretap and the illegal alteration. In such a case, the key data for the encryption process may be shared through a predetermined key-shared protocol in advance. The key data for the PIN may be shared between the processing settlement terminal 200 and the settlement application 110, and the key data for the biometrics verification data may be shared between the processing settlement terminal 200 and the biometrics authentication application 130.

### (Embodiment 2)

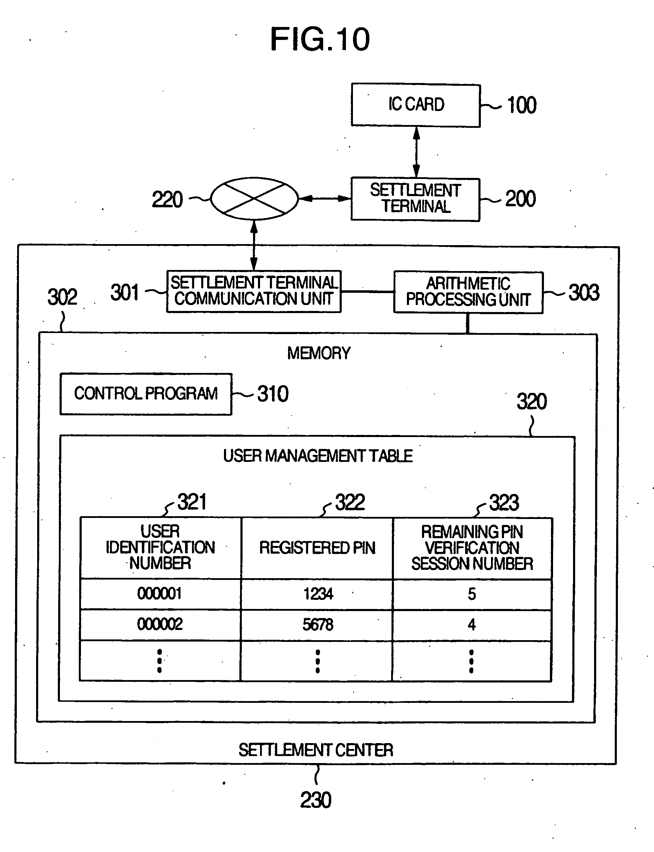

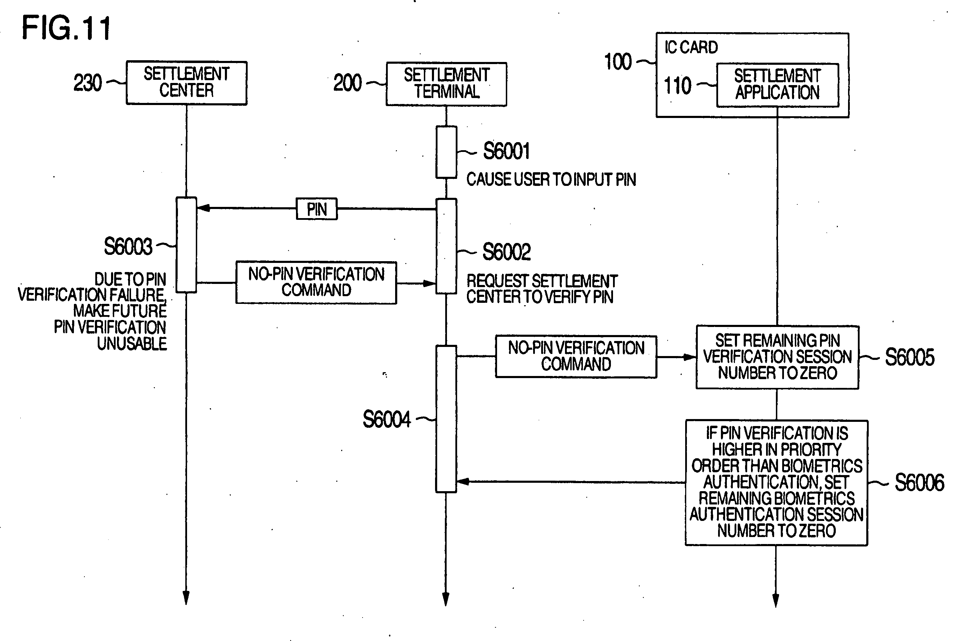

A second embodiment of the invention is explained with reference to Figs. 10 and 11. Fig. 10 is a block diagram showing the configuration of the settlement system according to the second embodiment including an IC card 100, a settlement terminal 200, a network 220 and a settlement center 230.

The IC card 100 is held by the user of the settlement terminal 200 and used for the person identification and the settlement transaction process. The settlement center 230 is configured of a computer or the like and connected to the settlement terminal 200 through the network 220 to centrally control the settlement process.

According to the second embodiment, like in the first embodiment, the settlement terminal 200 is assumed to be, for example, a bank ATM or a credit settlement terminal. Alternatively, the settlement terminal 200 may be a portable terminal such as a mobile phone or a PDA. Also, the user of the settlement terminal 200 is assumed to hold the IC card 100 as a monetary card such as a cash card or a credit card. Nevertheless, this embodiment is not limited to the settlement transaction process but also applicable with equal effect to the person identification using the IC card 100 to control the access such as entrance and exit or the access using a network.

The internal configuration of the settlement terminal 200 and the IC card 100 shown in Fig. 10 is similar to the corresponding configuration of the first embodiment shown in Fig. 1, except that according to this embodiment, the PIN verification for person identification is carried out at the settlement center.

Next, the internal configuration of the settlement center 230 shown in Fig. 10 is explained. The settlement center 230 includes a settlement terminal communication unit 301, a memory 302 and an arithmetic processing unit 303. The settlement terminal communication unit 301 is used for data communication with the settlement terminal 200 and has the function of connecting to the public lines such as telephone and internet or a dedicated network.

The memory 302 has the function of storing the control program 310 and the user management table 320 and is configured of a hard disk or a semiconductor memory. The user management table 320 is used for person identification of all the users of the settlement system according to the invention.

The arithmetic processing unit 303 is in charge of controlling the settlement center 230 as a whole and centrally manages the settlement process based on the control program 310 stored in the memory 302.

Next, the internal configuration of the user management table 320 is explained. The user management table 320 has recorded therein a user identification number 321, a registered PIN 322 and a remaining PIN verification session number 323 for each registered user. The user identification number 321 is for identifying the user and has the same value as the user identification number 121 managed by the settlement application 110 in the IC card 100 of each user. In the case of the settlement by a credit card, for example, the credit card number is set, while in the case of the transaction with a cash card the bank account number is set. Nevertheless, other numbers can also be used with equal effect for user identification.

The registered PIN 322 is the PIN of the user of the IC card 100. The remaining PIN verification session number 323 is the remaining number of times the PIN verification process is executed by the settlement center 230. A predetermined positive integer is set as an initial value of the remaining PIN verification session number 323, and reduced each time the person identification fails. Once the remaining PIN verification session number 323 reaches zero, the settlement center 230 makes the PIN verification inexecutable.

Next, the process executed by the settlement center 230 to make the PIN verification inexecutable in the case where the PIN verification by the settlement center 230 fails is explained with reference to Fig. 11.
<Step S6001> The settlement terminal 200 cause the user to input the PIN through the PIN input unit 202.
<Step S6002> The settlement terminal 200 sends the PIN input by the user to the settlement center 230 and requests the person identification by PIN verification.
<Step S6003> The settlement center 230 carries out the PIN verification using the PIN input by the user and the user management table 320. The sequence of this process assumes a case in which the PIN verification fails and the remaining PIN verification session number 119 is reduced to zero. Thus, the settlement center 230 sends a no-PIN verification command to the settlement terminal 200.
<Step S6004> The settlement terminal 200 sends the no-PIN verification command received from the settlement center 230 to the settlement application 110.
<Step S6005> The settlement application application 110 sets the remaining PIN verification session number 119 to zero and thus makes the PIN verification inexecutable.
<Step S6006> The settlement application 110 refers to the person identification method priority order 116, and in the case where the priority order of the PIN verification is higher than that of the biometrics authentication, the remaining biometrics authentication session number 118 is set to zero and makes the biometrics authentication inexecutable.

In the processing sequence explained above with reference to Fig. 11, assume that the priority order of the PIN verification is higher than that of the biometrics authentication. Both the remaining PIN verification session number 119 and the remaining biometrics authentication session number 118 are set to zero thereby to make both the PIN verification and the biometrics authentication inexecutable. In the case where the priority order of the biometrics authentication is higher than that of the PIN verification, on the other hand, only the PIN verification is made inexecutable, while the biometrics authentication is kept executable.

As long as the biometrics authentication is higher than the PIN verification in priority order, even in the case where the PIN verification becomes inexecutable, as explained above with reference to Fig. 8, a successful biometrics authentication makes it possible to carry out the PIN verification again from the next session.

## Claims

1. An IC card (100) for person identification of a user, comprising:
password verification means for person identification of the user for comparing a password (117) registered in the Ic card with a password received from outside the IC card (100); and
biometrics authentication means for person identification of the user for comparing biometrics data (132) registered in the IC card with biometrics data received from outside the IC card (100),
**characterised by**:
a means for managing a person identification method priority order (116) indicating a priority order of a person identification method, a remaining password verification session number (119) indicating the remaining number of times the password verification means can work and a remaining biometrics authentication session number (118) indicating the remaining number of times the biometrics authentication means can work, the person identification method priority order, the remaining password verification session number, and the remaining biometrics authentication session number being stored in a memory of the card; and
a means for holding in the memory a person identification method list (115) constituted by a list of usable person identification methods,
wherein, after determining the contents of the person identification method list (115) based on the remaining password verification session number (119) and the remaining biometrics authentication session number (118), the means for holding the person identification method list (115) is arranged to transmit the list (115) to a settlement terminal (200).

2. An IC card (100) for person identification of the user as in claim 1,
wherein, in the case where the person identification by the password verification means fails and the priority order of the password verification is set higher than that of the biometrics authentication as the person identification method priority order (116), the means for managing the person identification method priority order is arranged to decrease the remaining biometrics authentication session number (118) by a predetermined number, and
wherein, in the case where the person identification by the biometrics authentication means fails and the priority order of the biometrics authentication is set higher than that of the password verification as the person identification method priority order (116), the means for managing the person identification method priority order is arranged to decrease the remaining password verification session number (119) by a predetermined number.

3. An IC card (100) for person identification of the user as in claim 1,
wherein, in the case where the person identification by the password verification means succeeds and the priority order of the password verification is set higher than that of the biometrics authentication as the priority order of person identification method, the means for managing the person identification method priority order is arranged to increase the remaining biometrics authentication session number (118) by a predetermined number, and
wherein, in the case where the person identification by the biometrics authentication means succeeds and the priority order of the biometrics authentication is set higher than that of the password verification as the person identification method priority order (116), the means for managing the person identification method priority order being arranged to increase the remaining password verification session number (119) by a predetermined number.

4. An IC card (100) for person identification of the user as in claim 1,
wherein the managing means further manages a first password registered in the memory in advance; and
wherein, in the case where the execution of the biometrics authentication means succeeds upon receipt of a second password from outside the IC card (100) and the priority order of the biometrics authentication is set higher than that of the password verification as the person identification method, the biometrics authentication means is arranged to update the value of the first password to the value of the second password.

5. An IC card (100) for person identification of the user as in claim 1,
wherein, in the case where the remaining password verification session number (119) is reduced below a predetermined value and upon determination that the password verification cannot be continued, the means for holding the person identification method list (115) is arranged to send the person identification method list (115) not containing the person identification method by password verification to a settlement terminal (200).

6. An IC card (100) for person identification of the user as in claim 1,
wherein, in the case where the remaining biometrics authentication session number (118) is reduced below a predetermined value and upon determination that the biometrics authentication cannot be continued, the means for holding the person identification method list (115) is arranged to send the person identification method list (115) not containing the person identification method by biometrics authentication to a settlement terminal (200).

## Patentansprüche

1. IC-Karte (100) zur Personenerkennung eines Nutzers mit:
einer Passwort-Überprüfungseinrichtung zur Personenerkennung des Nutzers zum Vergleichen eines in der IC-Karte eingetragenen Passworts (117) mit einem von außerhalb der IC-Karte (100) empfangenen Passwort; und
einer biometrischen Authentifiziereinrichtung zur Personenerkennung des Nutzers zum Vergleichen von in der IC-Karte eingetragenen biometrischen Daten (132) mit von außerhalb der IC-Karte (100) empfangenen biometrischen Daten, **gekennzeichnet durch**:
eine Einrichtung zum Verwalten einer Prioritätsordnung von Personenerkennungsverfahren (116), die eine Prioritätsordnung eines Personenerkennungsverfahrens anzeigt, eine Anzahl (119) verbleibender Passwortüberprüfungssitzungen, die die verbleibende Anzahl an Wiederholungen anzeigt, die die Passwort-überprüfungseinrichtung ausführen kann, und eine Anzahl (118) verbleibender biometrischer Authentifiziersitzungen, die die verbleibende Anzahl an Wiederholungen anzeigt, die die biometrische Authentifiziereinrichtung ausführen kann, wobei die Prioritätsordnung von Personenerkennungsverfahren, die Anzahl verbleibender Passwortüberprüfungssitzungen und die Anzahl verbleibender biometrischer Authentifiziersitzungen in einem Speicher der Karte abgelegt sind; und
eine Einrichtung zum Führen einer Liste (115) von Personenerkennungsverfahren in dem Speicher, die aus einer Liste von anwendbaren Personenerkennungsverfahren besteht,
wobei nach dem Bestimmen der Inhalte der Liste (115) von Personenerkennungsverfahren anhand der Anzahl (119) verbleibender Passwortüberprüfungssitzungen und der Anzahl (118) verbleibender biometrischer Authentifiziersitzungen, die Einrichtung zum Führen der Liste (115) von Personenerkennungsverfahren dazu ausgelegt ist, die Liste (115) an ein Abrechnungsterminal (200) zu übertragen.

2. IC-Karte (100) zur Personenerkennung eines Nutzers nach Anspruch 1,
wobei, falls die Personenerkennung durch die Passwortüberprüfungseinrichtung fehlschlägt und die Prioritätsordnung der Passwortüberprüfung höher gesetzt ist als die der biometrischen Authentifizierung, die Einrichtung zur Verwaltung der Prioritätsordnung von Personenerkennungsverfahren dazu ausgelegt ist, die Anzahl (118) verbleibender biometrischer Authentifiziersitzungen um eine vorgegebene Anzahl zu verringern, und
wobei, falls die Personenerkennung durch die biometrische Authentifiziereinrichtung fehlschlägt und die Prioritätsordnung der biometrischen Authentifizierung höher gesetzt ist als die der Passwortüberprüfung, die Einrichtung zum Verwalten der Prioritätsordnung von Personenerkennungsverfahren dazu ausgelegt ist, die Anzahl (119) verbleibender Passwortüberprüfungssitzungen um eine vorgegebene Anzahl zu verringern.

3. IC-Karte (100) zur Personenerkennung des Nutzers nach Anspruch 1,
wobei, falls die Personenerkennung durch die Passwortüberprüfungseinrichtung erfolgreich ist und die Prioritätsordnung der Passwortüberprüfung höher gesetzt ist als die der biometrischen Authentifizierung, die Einrichtung zum Verwalten der Prioritätsordnung von Personenerkennungsverfahren dazu ausgelegt ist, die Anzahl (118) verbleibender biometrischer Authentifiziersitzungen um eine vorgegebene Anzahl zu erhöhen, und
wobei, falls die Personenerkennung durch die biometrische Authentifiziereinrichtung erfolgreich ist und die Prioritätsordnung der biometrischen Authentifizierung höher gesetzt ist als die der Passwortüberprüfung, die Einrichtung zum Verwalten der Prioritätsordnung von Personenerkennungsverfahren dazu ausgelegt ist, die Anzahl (119) verbleibender Passwortüberprüfungssitzungen um eine vorgegebene Anzahl zu erhöhen.

4. IC-Karte (100) zur Personenerkennung des Nutzers nach Anspruch 1,
wobei die Verwaltungseinrichtung ferner ein zuvor in den Speicher eingetragenes erstes Passwort verwaltet; und
wobei, falls das Ausführen der biometrischen Authentifiziereinrichtung nach Empfang eines zweiten Passworts von außerhalb der IC-Karte (100) erfolgreich ist und die Prioritätsordnung der biometrischen Authentifizierung höher gesetzt ist als die der Passwortüberprüfung, die biometrische Authentifiziereinrichtung dazu ausgelegt ist, den Wert des ersten Passworts auf den Wert des zweiten Passworts zu aktualisieren.

5. IC-Karte (100) zur Personenerkennung des Nutzers nach Anspruch 1,
wobei, falls die Anzahl (119) verbleibender Passwortüberprüfungssitzungen unter einen vorgegeben Wert herabgesetzt wird und nach Bestimmen, dass die Passwortüberprüfung nicht fortgeführt werden kann, die Einrichtung zum Führen der Liste (115) von Personenerkennungsverfahren dazu ausgelegt ist, die Liste (115) von Personenerkennungsverfahren, die das Personenerkennungsverfahren mittels Passwortüberprüfung nicht enthält, an ein Abrechnungsterminal (200) zu senden.

6. IC-Karte (100) zur Personenerkennung des Nutzers nach Anspruch 1,
wobei, falls die Anzahl (118) verbleibender biometrischer Authentifiziersitzungen unter einen vorgegebenen Wert herabgesetzt wird und nach Bestimmen, dass die biometrische Authentifizierung nicht fortgeführt werden kann, die Einrichtung zum Führen der Liste (115) von Personenerkennungsverfahren dazu ausgelegt ist, die Liste (115) von Personenerkennungsverfahren, die das Personenerkennungsverfahren mittels biometrischer Authentifizierung nicht enthält, an ein Abrechnungsterminal (200) zu senden.

## Revendications

1. Carte à puce (100) pour l'identification personnelle d'un utilisateur, comportant :
des moyens de vérification de mot de passe pour une identification personnelle de l'utilisateur afin de comparer un mot de passe (117) enregistré dans la carte à puce à un mot de passe reçu depuis l'extérieur de la carte à puce (100), et
des moyens d'authentification biométrique pour une identification personnelle de l'utilisateur afin de comparer des données biométriques (132) enregistrées dans la carte à puce à des données biométriques reçues depuis l'extérieur de la carte à puce (100),
**caractérisée par** :
des moyens pour gérer un ordre de priorité de procédé d'identification personnelle (116) indiquant un ordre de priorité d'un procédé d'identification personnelle, un nombre de sessions de vérification de mot passe restant (119) indiquant le nombre de fois que les moyens de vérification de mot de passe peuvent encore fonctionner et un nombre de sessions d'authentification biométrique restant (118) indiquant le nombre de fois que les moyens d'authentification biométrique peuvent encore fonctionner, l'ordre de priorité de procédé d'identification personnelle, le nombre de sessions de vérification de mot de passe restant, et le nombre de sessions d'authentification biométrique restant étant mémorisés dans une mémoire de la carte, et
des moyens pour conserver dans la mémoire une liste de procédés d'identification personnelle (115) constituée d'une liste de procédés d'identification personnelle utilisables,
dans laquelle, après la détermination du contenu de la liste de procédés d'identification personnelle (115), sur la base du nombre de sessions de vérification de mot de passe restant (119) et du nombre de sessions d'authentification biométrique restant (118), les moyens pour conserver la liste de procédés d'identification personnelle (115) sont conçus pour transmettre la liste (115) à un terminal de règlement (200).

2. Carte à puce (100) pour une identification personnelle de l'utilisateur selon la revendication 1,
dans laquelle, dans le cas où l'identification personnelle par les moyens de vérification de mot de passe échoue et que l'ordre de priorité de la vérification de mot de passe est établi à un niveau supérieur à celui de l'authentification biométrique en tant qu'ordre de priorité de procédé d'identification personnelle (116), les moyens pour gérer l'ordre de priorité de procédé d'identification personnelle sont conçus pour réduire le nombre de sessions d'authentification biométrique restant (118) d'un nombre prédéterminé, et
dans laquelle, dans le cas où l'identification personnelle par les moyens d'authentification biométrique échoue et que l'ordre de priorité de l'authentification biométrique est établi à un niveau supérieur à celui de la vérification de mot de passe en tant qu'ordre de priorité de procédé d'identification personnelle (116), les moyens pour gérer l'ordre de priorité de procédé d'identification personnelle sont conçus pour réduire le nombre de sessions de vérification de mot de passe restant (119) d'un nombre prédéterminé.

3. Carte à puce (100) pour une identification personnelle de l'utilisateur selon la revendication 1,
dans laquelle, dans le cas où l'identification personnelle par les moyens de vérification de mot de passe réussie et que l'ordre de priorité de la vérification de mot de passe est établi à un niveau supérieur à celui de l'authentification biométrique en tant qu'ordre de priorité de procédé d'identification personnelle, les moyens pour gérer l'ordre de priorité de procédé d'identification personnelle sont conçus pour augmenter le nombre de sessions d'authentification biométrique restant (118) d'un nombre prédéterminé, et
dans laquelle, dans le cas où l'identification personnelle par les moyens d'authentification biométrique réussie et que l'ordre de priorité de l'authentification biométrique est établi à un niveau supérieur à celui de la vérification de mot de passe en tant qu'ordre de priorité de procédé d'identification personnelle (116), les moyens pour gérer l'ordre de priorité de procédé d'identification personnelle étant conçus pour augmenter le nombre de sessions de vérification de mot de passe restant (119) d'un nombre prédéterminé.

4. Carte à puce (100) pour une identification personnelle de l'utilisateur selon la revendication 1,
dans laquelle les moyens de gestion gèrent en outre un premier mot de passe enregistré dans la mémoire à l'avance, et
dans laquelle, dans le cas où l'exécution des moyens d'authentification biométrique réussie à la réception d'un second mot de passe depuis l'extérieur de la carte à puce (100) et que l'ordre de priorité de l'authentification biométrique est établi à un niveau supérieur à celui de la vérification de mot de passe en tant que procédé d'identification personnelle, les moyens d'authentification biométrique sont conçus pour mettre à jour la valeur du premier mot de passe sur la valeur du second mot de passe.

5. Carte à puce (100) pour une identification personnelle de l'utilisateur selon la revendication 1,
dans laquelle, dans le cas où le nombre de sessions de vérification de mot de passe restant (119) est réduit au-dessous d'une valeur prédéterminée et lors de la détermination que la vérification de mot de passe ne peut pas se poursuivre, les moyens pour conserver la liste de procédés d'identification personnelle (115) sont conçus pour envoyer la liste de procédés d'identification personnelle (115) ne contenant pas le procédé d'identification personnelle par vérification de mot de passe à un terminal de règlement (200).

6. Carte à puce (100) pour une identification personnelle de l'utilisateur selon la revendication 1,
dans laquelle, dans le cas où le nombre de sessions d'authentification biométrique restant (118) est réduit au-dessous d'une valeur prédéterminée et lors de la détermination que l'authentification biométrique ne peut pas se poursuivre, les moyens pour conserver la liste de procédés identification personnelle (115) sont conçus pour envoyer la liste de procédés d'identification personnelle (115) ne contenant pas le procédé d'identification personnelle par authentification biométrique à un terminal de règlement (200).
